# DEMANDE DE BREVET EUROPEEN

(11) **EP 4 091 510 A1**
(43) Date de publication de la demande: **23.11.2022**
(21) Numéro de dépôt: 22173572.3
(22) Date de dépôt: 16.05.2022
(51) Int. Cl.: A47J 47/10, A45C 11/20

(54) **BOÎTE D'EMBALLAGE ALIMENTAIRE RÉUTILISABLE**

(30) Priorité: 19.05.2021 BE 202105405
(71) Demandeur: BWAT BEL SRL, 1030 Bruxelles (BE)
(72) Inventeur: LALOUX, Sébastien, 1030 Bruxelles (BE)
(74) Mandataire: Office Kirkpatrick

(57) **Abrégé**

L'invention concerne une boite réutilisable dont le caractère pliable et le design particulier facilite le nettoyage, le transport et le stockage. Cette boite comprend une base pliable au moins en deux, et un couvercle amovible pliable au moins en deux, afin de pouvoir être nettoyés au lave-vaisselle. La base et le couvercle sont en matériau plastique, pour assurer la durabilité mais également pour une meilleure conservation de la chaleur, notamment par rapport aux boites à pizza classiques en carton.

## Description

### Domaine de l'invention

L'invention s'inscrit dans le domaine des emballages alimentaires. Plus particulièrement, l'invention concerne une boite réutilisable dont le caractère pliable et le design particulier facilite le nettoyage, le transport et le stockage.

### Contexte

Il est notoire que les services de livraison de nourriture à domicile, bien qu'extrêmement efficients et utiles, sont une catastrophe en termes écologiques. En effet, la majeure partie du temps, la nourriture est livrée dans des emballage jetables (e.g. boites en plastique souple) et/ou des emballages recyclables mais dont l'utilisation les rend non-recyclables parce qu'ils finissent recouvert de nourriture, d'huile ou de graisse (e.g. cartons à pizza). La nette augmentation de la demande à fait exploser le volume de ce genre d'emballage et les problèmes liées à ceux-ci deviennent désormais critiques. L'industrie propose déjà des emballages réutilisables, notamment en plastique dur (e.g. polyester thermoplastique), qui doivent être lavés après usage à domicile et qui sont ensuite remis au coursier lors de la prochaine livraison. Le problème majeur de ce genre de boites réutilisables est que leur nettoyage n'est pas du tout pratique en raison de la forme monobloc du contenant. En particulier lorsqu'il s'agit de les laver à domicile avec un lave-vaisselle. De plus, leur design n'est pas adapté à un transport sûr ni à un stockage optimisé. Les désavantages exposés cidessus restent également pertinents pour des emballages réutilisables destinés à des utilisations purement domestiques.

C'est pourquoi la demanderesse a jugé utile de développer une boite d'emballage réutilisable pour transporter de la nourriture, tout en étant lavable dans un lave-vaisselle après utilisation et d'un design particulier lui conférant un stockage optimisé et un transport fiable.

### Solution de l'invention

À cette fin, l'invention concerne une boite alimentaire réutilisable comprenant :
- une base pliable au moins en deux, et
- un couvercle amovible pliable au moins en deux, la base et le couvercle étant en matériau plastique.

L'invention permet avant tout à l'utilisateur de séparer la base du couvercle de la boite et de plier chaque partie sur elle-même afin de les nettoyer facilement dans un lave-vaisselle. De préférence, les faces internes des éléments de la boite (base et couvercle) sont apparents une fois que ceux-ci sont pliés, afin que les parties ayant été en contact avec les aliments soient bien nettoyés. Une fois que le contenant et le couvercle sont propres, l'utilisateur peut facilement reconstituer la boite d'emballage en assemblant les deux parties préalablement dépliées. L'invention peut comprendre des moyens pour sécuriser l'assemblage de la boite pour que celle-ci ne se replie pas de manière accidentelle.

Dans la présente description, les termes « boite d'emballage », « boite » et « emballage » doivent être considérés comme des synonymes et sont utilisés de manière interchangeable pour désigner l'invention.

La nourriture destinée à être contenue dans l'emballage peut être tout type de nourriture solide, chaude ou froide.

Une base désigne ici une pièce solide agencée pour supporter ou contenir de la nourriture, par exemple une pizza, une quiche ou une tarte. Elle est constituée d'un fond ou plateau, destiné à recevoir ou supporter la nourriture et peut éventuellement comprendre des rebords. Bien que la base puisse être de forme diverse, elle est de préférence de forme rectangulaire ou circulaire. Dans une forme de réalisation, la base est circulaire. Elle peut par exemple avoir un diamètre compris entre 10 et 50 cm. Dans une autre forme de réalisation, la base est rectangulaire. Elle est peut alors par exemple avoir une longueur de diagonale comprise entre 10 et 50 cm. Les dimensions ne sont pas déterminantes, l'idée étant que la boite, une fois pliée puisse tenir dans un lave-vaisselle.

La base est agencée de manière à pouvoir être repliée sur elle-même le long d'un axe de pliage formant une charnière. De préférence, cet axe de pliage est positionné sur le fond ou le plateau, pas sur un rebord. De préférence, l'axe de pliage divise la base en deux parties égales et symétriques. Par exemple, lorsque la base est ronde, l'axe de pliage correspond à un diamètre de la base. Pour cela, la base peut être d'une épaisseur inférieure le long de l'axe de pliage de façon à former une charnière.

Le fond de la base est de préférence plat pour que la nourriture puisse y être déposée sans être abimée. Le fond de la base peut être plein ou évidé en certains endroits, par exemple pour permettre une aération.

La base est de préférence agencée pliable sur elle-même autour d'un axe de pliage s'étendant sur toute la largeur de la partie plane (le fond) de la base. Si la base comprend un bord, celui-ci est discontinu dans le prolongement de la ligne de pliage pour rendre ce pliage possible.

De préférence, le fond de la base est plein afin d'éviter que des fluides éventuellement exsudés de la nourriture coulent sous la boite.

La base de la boite d'emballage, et notamment le fond de la base, peut également présenter un relief sur la surface destinée à recevoir la nourriture. Par exemple, elle peut comprendre une ou plusieurs rainures, c'est-à-dire des lignes creusées dans le matériau de la boite, ou des languettes sur le matériau de la base. Ainsi, lorsque la nourriture est posée sur le fond de la base, de l'air peut circuler sous la nourriture évitant ainsi la condensation et les fluides exsudés de la nourriture, comme par exemple de la graisse ou tout autre liquide susceptible d'endommager la qualité de la nourriture pendant le stockage peuvent être drainés. Dans le cas d'une base circulaire, ces rainures et/ou rebords sont de préférences radiaux, afin de drainer les fluides vers l'extérieur de la base.

La base peut également comprendre un moyen pour retenir les graisses près du pourtour de la base et ce, sans salir la partie inférieure du couvercle. Il peut s'agir par exemple d'une rainure ménagée le long du pourtour du fond de la base, concentrique.

La boite selon l'invention comprend avantageusement des moyens de solidarisation de la base au couvercle. Par exemple, le couvercle peut comprendre, sur au moins une partie de son pourtour, un bourrelet destiné à être inséré dans une rainure ménagée sur le pourtour de la base ou via un simple rebord contre lequel ledit couvercle vient buter.

La fixation du couvercle peut être sécurisée par un logement présent dans la rainure de fixation de la base dans lequel le bord du couvercle vient se loger.

Un couvercle désigne ici une pièce solide configurée pour recouvrir la base et définir avec elle un volume.

La forme globale et la taille du couvercle, sont complémentaires de la forme de la base sur laquelle il est destiné à être posé.

Dans une forme de réalisation, la base est globalement plate et le couvercle est une pièce de type « coque » comprenant une partie globalement plane entourée de rebords ou bords formant un angle avec la surface plane et définissant la hauteur de la boite. Cette hauteur est choisie suffisante par rapport à l'utilisation envisagée, elle est par exemple comprise entre 1cm et 10 cm. Par exemple pour une pizza, la boite a une hauteur comprise entre 1cm et 7 cm.

Le couvercle est agencé pliable sur lui-même autour d'un axe de pliage s'étendant sur toute la largeur de la partie plane du couvercle. Si le couvercle comprend un bord, celui-ci est discontinu dans le prolongement de la ligne de pliage pour rendre ce pliage possible.

De préférence, l'axe de pliage ou charnière, divise le couvercle en deux parties égales et symétriques. Par exemple, dans le cas d'un couvercle rond, l'axe de pliage est confondu avec un diamètre de la surface plane.

Le bord du couvercle peut comprendre des moyens de sécurisation ou de fixation du couvercle à la base. Il s'agit par exemple d'un bourrelet situé le long du bord du couvercle agencé complémentaire d'un logement ad-hoc de la base de la boite.

Le couvercle peut comprendre des ouvertures permettant une aération de la boite, par exemple au moyen de fentes, ou de trous directement découpés dans le matériau du couvercle. La surface totale des ouvertures est telle que l'air puisse circuler mais sans toutefois refroidir trop rapidement la nourriture chaude, le cas échéant. Par exemple, les ouvertures représentent au maximum 20% de la surface de la boite, de préférence au maximum 15% de la surface de la boite.

Le couvercle peut comprendre des moyens de préhension. Par exemple, certaines parties du couvercle peuvent être évidées afin de faciliter la prise en main du couvercle, ou des protubérances peuvent être prévues pour faciliter la saisie du couvercle.

La base et le couvercle sont réalisés dans un matériau plastique compatible avec un contact alimentaire. De préférence, la boite est en polypropylène afin de minimiser les transferts de microparticules plastiques vers la nourriture pendant son utilisation. L'épaisseur du matériau plastique est de préférence comprise entre 0.25 et 4 mm afin d'assurer la rigidité de la boite et d'assurer un caractère isolant suffisant. Le matériau plastique confère à l'invention son caractère réutilisable car il permet à la base et au couvercle de la boite d'être lavés sans détériorer leur qualité. De plus, de façon surprenante, il a été observé que la conservation de la chaleur était supérieur dans une boite en matériau plastique, pourvue d'ouvertures que dans un carton à pizza classique.

Grâce à leurs axes de pliage respectifs, la base et la couvercle formant la boite d'emballage peuvent être pliés de manière à pouvoir être mis facilement au lave-vaisselle, sans encombrer totalement celui-ci. Plus particulièrement, le pliage permet aux éléments de la boite d'être glissés entre les supports du lave-vaisselle destinés aux assiettes.

La surface inférieure de la base peut comprendre, sur sa partie externe, un relief complémentaire d'un autre relief ménagé sur le couvercle pour pouvoir empiler plusieurs boîtes les unes sur les autres.

L'invention sera mieux comprise à l'aide de la description suivante d'un mode de réalisation de l'invention, en référence aux dessins sur lesquels :
- La Figure 1 est une vue éclatée en perspective d'une boite selon l'invention ;
- La Figure 2 est une vue en perspective de la boite fermée ;
- La Figure 3 est une vue en coupe de la boite de la figure 2 ;
- La Figure 4 est un détail de la vue de la figure 3 ;
- La Figure 5 est une vue du dessus de la base;
- La Figure 6 est une vue en perspective de la base de la figure 5, partiellement repliée ;
- La Figure 7 est une vue en perspective du couvercle partiellement replié.

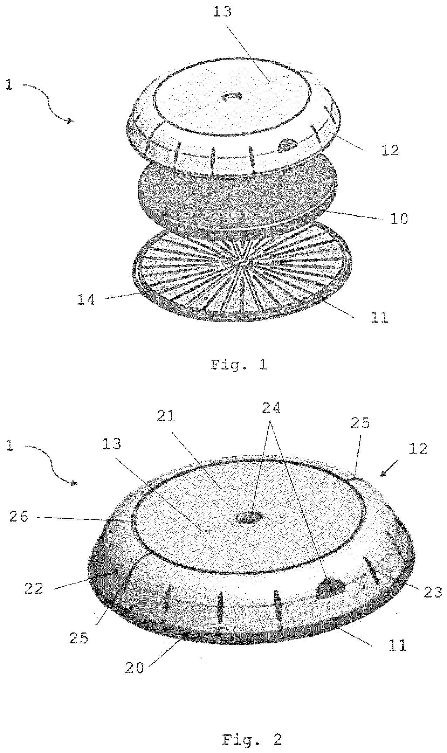

En référence aux Figures 1 et 2, une boite d'emballage 1 destinée à contenir par exemple une pizza 10 comprend une base 11 et un couvercle 12 réalisés en polypropylène via un procédé de moulage ou d'impression 3D. La base 11 et le couvercle 12 sont pliables en deux parties égales le long des axes de pliages 14 et 13, respectivement.

La nature intégralement plastique des éléments 11 et 12 permet de rendre l'emballage réutilisable après lavage.

Le couvercle 12 comprend une partie supérieure 21 plane, d'un diamètre de 26 cm et un bord 22 d'une hauteur de 5.7 cm. Le couvercle 12 est en contact avec la base 11 le long du pourtour 20.

Afin de permettre une aération optimale de la nourriture, le couvercle 12 comprend ici quatorze fentes 23 uniformément réparties le long du bord 22 du couvercle. Le couvercle comprend également des ouvertures 24, au centre de la partie supérieure plane 21 et au niveau du rebord 22, qui, bien que participant également à l'aération de la boite, forment une poignée facilitant le découplage du couvercle et de la base.

Pour rendre le pliage du couvercle possible selon l'axe de pliage 13, le bord 22 est fendu sur toute sa hauteur dans les prolongements 25 de l'axe 13.

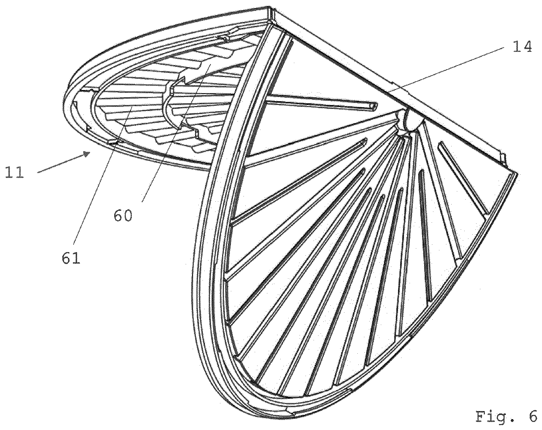

Le couvercle 12 comprend également une rainure circulaire 26 sur sa partie haute permettant l'empilement des boites. Plus particulièrement, cette rainure est conformée de manière à accueillir le rebord 60 (cf. Figure 6) de forme complémentaire de la surface inférieure de la base d'une autre boite.

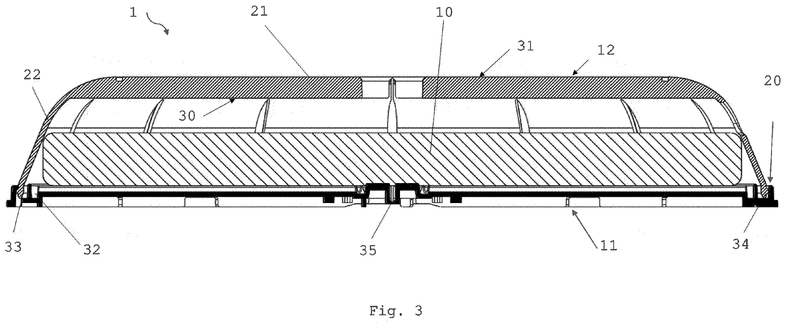

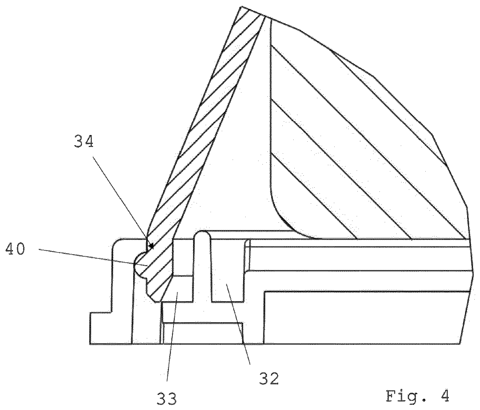

En référence aux Figures 3 et 4, le couvercle 12 est une pièce de type « coque » avec une face intérieure 30 et une face extérieure 31. La partie supérieure plane 21 a une épaisseur de 2 à 4 mm et le bord 22 une épaisseur de 2 à 4 mm (des renforts étants prévus par endroits, l'épaisseur n'est pas la même partout). La rigidité du couvercle peut être assurée par des renforts prenant la forme de poutres ou parties plus épaisses agencées à l'intérieur du couvercle.

La base 11 a une épaisseur de 2 à 4 mm. Le pourtour 20 de la base 11 comprend deux rainures circulaires concentriques 32 et 33 ; la rainure 33 étant d'un diamètre légèrement supérieur. La rainure 33 est conformée pour loger le rebord 34 du couvercle . En particulier, la rainure externe 33 comprend un retour rétrécissant la largeur de l'ouverture vers le haut. Le rebord 34 du couvercle est muni d'un bourrelet 40 sur au moins une partie de son pourtour permettant de sécuriser l'assemblage base-couvercle par coopération de forme. En effet, grâce à la géométrie particulière de la rainure 33, le couvercle peut être clipsé sur la base. Pour l'assemblage du couvercle et de la base, les propriétés élastiques du plastiques permettent au bourrelet de s'insérer dans la rainure en en écartant l'ouverture lorsqu'on appuie sur le couvercle. Le retour de la rainure sert ensuite de butée au bourrelet du couvercle pour assurer la solidarisation du couvercle et de la base. Pour désolidariser le couvercle et la base, les propriétés élastiques du matériau de la rainure sont à nouveau utilisées lorsqu'on tire sur le couvercle, pour libérer le bourrelet de la rainure 33.

La rainure 32 permet quant à elle de récolter les fluides exsudés de la nourriture 10 contenue dans la boite et ainsi protéger le couvercle.

La charnière 35 de la base est réalisée, le long de l'axe de pliage 14, par une réduction de l'épaisseur de la base sur cette ligne. Afin que cette charnière soit solide, elle peut être renforcée par un ajout de matière.

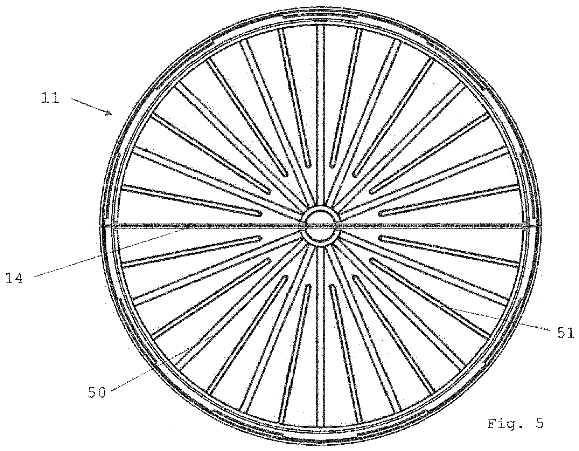

En référence à la Figure 5, la base 11 pliable autour de l'axe 14 comprend une succession de rainures 51 et de languettes 50 radiales. Les languettes permettent principalement de maintenir la pizza en place et de permettre une aération sous la pizza alors que les rainures permettent de récolter des graisses suintantes ou autre fluides qui à termes peuvent dégrader la nourriture. De préférence, les rainures 51 débouchent sur la rainure 32 du pourtour de la base. Alternativement, ces rainures-languettes peuvent avoir d'autres géométries, comme par exemple une géométrie en nid d'abeille ou des rainures et languettes parallèles. Les languettes peuvent également être remplacées par des plots ou des picots.

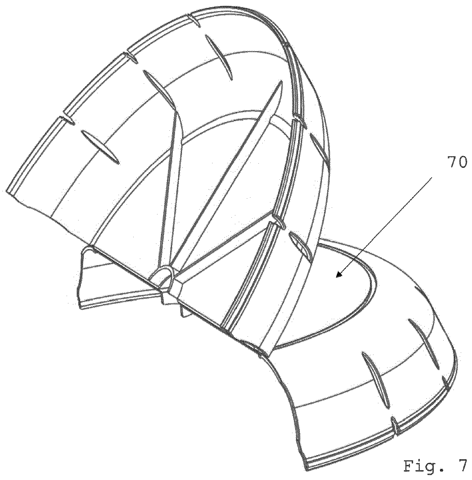

Les Figures 6 et 7 présentent respectivement la base et le couvercle partiellement pliés. La charnière 14 de la base 11 est agencée de manière à ce que la base puisse être intégralement repliée sur sa face inférieure 61. De manière similaire, le couvercle peut être replié sur la face extérieure 70 de sa partie plane. De cette manière, une fois pliés, la base et le couvercle adoptent une forme adaptée au lave-vaisselle, par exemple ils sont suffisamment fins pour être glissés entre les supports pour assiettes.

De façon surprenante, et malgré le grand nombre d'ouvertures, il a été observée que la boite de l'invention permettait une meilleure conservation de la chaleur des aliments.

La boite illustrée sur les figures a été testée pour ses propriétés de maintien de chaleur. Deux pizzas ont été cuites à la même température. A la sortie du four, une pizza a été placée dans un carton classique de livraison de pizza et l'autre a été placée dans la boite de l'invention. Après 10 minutes, la pizza dans la boite de l'invention était encore 9.7 °C plus chaude que la pizza dans la boite en carton.

De préférence, le plastique utilisé pour la base de la boite est légèrement rugueux, afin que les éventuelles marques laissées lors de la découpe de nourriture soient moins visibles. Par contre, il est préférable que le plastique du bourrelet du couvercle soit plutôt lisse pour faciliter son insertion dans la rainure de la base.

Une boite de forme ronde a été ici illustrée, mais il est évident pour un homme du métier que toute autre forme est envisageable.

## Revendications

1. Une boite alimentaire (1) réutilisable comprenant :
- une base (11) pliable au moins en deux, et
- un couvercle (12) amovible pliable au moins en deux,
la base (11) et le couvercle (12) étant en matériau plastique.

2. Une boite alimentaire réutilisable selon la revendication 1, dans laquelle la base (11) comprend un fond de support des aliments, et la base est pliable le long d'un axe situé sur le fond de la base.

3. Une boite alimentaire réutilisable selon l'une des revendications 1 et 2, dans laquelle la base (11) et le couvercle (12) sont pliables symétriquement le long d'une charnière (14, 13) .

4. Une boite alimentaire réutilisable selon l'une des revendications 1 à 3, dont le couvercle (12) comprend des ouvertures (23) d'aération.

5. Une boite alimentaire réutilisable selon l'une des revendications 1 à 4, dont la base présente un relief (50, 51) sur la surface destinée à recevoir la nourriture.

6. Une boite alimentaire réutilisable selon la revendication 5, dont le relief comprend des rainures (51, 32) de drainage et/ou des languettes (50) de surélévation.

7. Une boite alimentaire réutilisable selon la revendication 6, de forme substantiellement cylindrique et dont les rainures (51) de drainage et/ou les languettes (50) de surélévation sont au moins en partie disposées radialement sur la base.

8. Une boite alimentaire réutilisable selon l'une des revendications 6 et 7, dont les rainures de drainage comprennent une rainure périphérique (32).

9. Une boite alimentaire réutilisable selon l'une des revendications 1 à 8, pour laquelle le matériau plastique est du polypropylène.

10. Une boite alimentaire réutilisable selon la revendication 9, pour laquelle l'épaisseur minimum de polypropylène est de 0.25 mm.

11. Une boite alimentaire réutilisable selon les revendications 1 à 10, comprenant des moyens (33, 40) pour sécuriser l'assemblage de la boite.

12. Une boite alimentaire réutilisable selon l'une des revendications 1 à 11, dans laquelle la base (11) et le couvercle (12) comprennent des reliefs (60, 26) complémentaires pour empiler au moins deux boites.

13. Une boite alimentaire réutilisable selon l'une des revendications 1 à 12, dans laquelle le couvercle (12) comprend des moyens (24) de préhension.

14. Une boite alimentaire réutilisable selon l'une des revendications 1 à 13, dont la base est de forme circulaire.

15. Une boite alimentaire réutilisable selon l'une des revendications 1 à 13, dont la base est de forme rectangulaire.
